Europäisches Patentamt

European Patent Office

Office européen des brevets

(19)

(11) Veröffentlichungsnummer: **0 164 144**
**B1**

(12) **EUROPÄISCHE PATENTSCHRIFT**

(45) Veröffentlichungstag der Patentschrift:
**22.06.88**

(51) Int. Cl.⁴: **H 02 M 3/335**

(21) Anmeldenummer: **85200660.0**

(22) Anmeldetag: **29.04.85**

(54) Gleichstrom/Gleichstrom-Wandler.

(30) Priorität: **09.05.84  CH 2265/84**

(43) Veröffentlichungstag der Anmeldung:
**11.12.85 Patentblatt 85/50**

(45) Bekanntmachung des Hinweises auf die Patenterteilung:
**22.06.88 Patentblatt 88/25**

(84) Benannte Vertragsstaaten:
**CH DE FR GB LI NL SE**

(56) Entgegenhaltungen:
**US - A - 4 290 101**
**US - A - 4 417 197**

**IBM TECHNICAL DISCLOSURE BULLETIN, Band 25, Nr. 2, July 1982, page 626, New York, US; D. AZZIS et al.: "Low tolerance multiple-output switched power supply"**
**PATENTS ABSTRACTS OF JAPAN, Band 5, Nr. 159 (E-77) [831], 14 Oktober 1981; & JP-A-56 88672 FUJITSU K.K.) 18-07-1981**

(73) Patentinhaber: **Hasler AG, Belpstrasse 23, CH-3000 Bern 14 (CH)**

(72) Erfinder: **Kislovski, André, Wylerringstrasse 1, CH-3014 Bern (CH)**

(74) Vertreter: **Schwerdtel, Eberhard, Dr., c/o Hasler AG Belpstrasse 23, CH-3000 Bern 14 (CH)**

## Beschreibung

Die Erfindung betrifft einen Gleichstrom/Gleichstrom-Wandler nach dem Prinzip des Schaltreglers mit starrer Taktfrequenz und mit Pulsbreitenmodulation entsprechend dem Oberbegriff von Anspruch 1.

Derartige Gleichstrom/Gleichstrom-Wandler sind allgemein bekannt. Sie besitzen meistens nur einen Ausgangskreis zur Erzeugung einer einzigen Ausgangsspannung. Es sind jedoch auch Wandler der genannten Art mit mehr als einem Ausgangskreis bekannt zur Erzeugung von wenigstens zwei geregelten Ausgangsspannungen. Hierbei steuert einer der Ausgangskreise mittels seines Steuerkreises den Primärstromunterbrecher des Wandlers, und die anderen Ausgangskreise regeln über unabhängige Regelschleifen zusätzlich bezüglich der durch den ersten Ausgangskreis festgelegten Pulsbreiten.

Die bei diesem Aufbau des Gleichstrom/Gleichstrom-Wandlers erreichbare statische Genauigkeit der Regelung entspricht den geforderten Werten. Dagegen ist das dynamische Verhalten ungenügend. Lastsprünge an einem der Ausgangskreise beeinflussen zwangsläufig die Ausgangswerte der anderen Ausgangskreise. Transienten der Last wirken damit auf alle Ausgänge.

Aus der Patentschrift US-A-4 290 101 ist ein Gleichstrom/Gleichstrom-Wandler bekannt, bei dem drei Schaltregler gemeinsam einen einzigen Ausgangskreis speisen. Der Wandler besitzt einen Spannungsregelkreis, dessen Fehlersignal allen Schaltreglern gemeinsam zugeführt wird. Ein Ringzähler sorgt dafür, dass die Schaltregler in vorgegebener Reihenfolge und im Takt eines Oszillators angesteuert werden, wobei das jeweilige Fehlersignal die jeweilige Einschaltdauer des Primärstromes bestimmt. Dieser Wandler ermöglicht es, mit relativ kleinen Primärströmen einen relativ grossen Sekundärstrom zu erzeugen.

Die Aufgabe der Erfindung besteht nun darin, einen Gleichstrom/Gleichstrom-Wandler nach dem Prinzip des Schaltreglers anzugeben, der wenigstens zwei getrennte Ausgangskreise aufweist, die unabhängig voneinander geregelt sind. Hierdurch sollen die Ausgangskreise nicht nur statisch, sondern auch dynamisch entkoppelt werden. Diese Aufgabe wird durch die kennzeichnenden Teile von Anspruch 1 gelöst. Die anderen Ansprüche geben Ausgestaltungen der Erfindung wieder. Ein entsprechend der Erfindung aufgebauter Wandler bietet damit bei ähnlich einfachem Aufbau wie bei den bekannten Wandlern Eigenschaften, die eine wesentlich gesteigerte Gebrauchstauglichkeit bedeuten.

Im folgenden wird die Erfindung anhand von vier Figuren beispielsweise näher beschrieben. Es zeigen:

Fig. 1 Pulsdiagramm entsprechend dem Stand der Technik.

Fig. 2 Pulsdiagramm entsprechend der Erfindung.

Fig. 3 Blockschaltbild eines Gleichstrom/Gleichstrom-Wandlers.

Fig. 4 Blockschaltbild eines weiteren Gleichstrom/Gleichstrom-Wandlers.

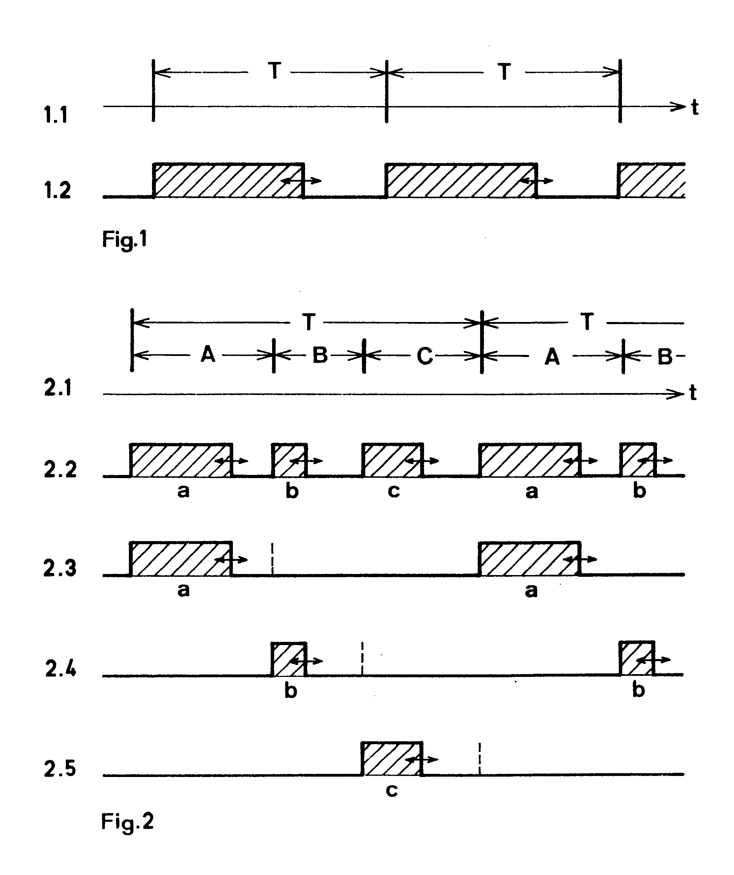

Ein Gleichstrom/Gleichstrom-Wandler entsprechend dem genannten Stand der Technik weist einen Leistungsimpulstransformator mit einer Primär- und einer oder mehreren Sekundärwicklungen auf. Die gewünschte Ausgangsspannung wird mittels eines Speicher- und Ausgangskreises und eines Reglers dadurch geregelt, dass der Primärstrom periodisch ein- und ausgeschaltet wird, wobei der Regler innerhalb jedes Taktintervalls die Länge der Einschaltzeit festlegt bzw. zum Zwecke der Regelung variiert. Dies zeigt Fig. 1. In Zeile 1.1 ist die Zeitskala t dargestellt mit den periodischen Taktintervallen T. Zeile 1.2 stellt die Ein- und Ausschaltintervalle dar, wobei die Einschaltintervalle schraffiert gezeichnet sind. Jedes Einschaltintervall beginnt gleichzeitig mit dem zugeordneten Taktintervall T und endet im Laufe des Taktintervalls. Durch Doppelpfeife wird angedeutet, dass das Intervallende zum Zwecke der Regelung beliebig wählbar ist. Sind mehrere Ausgangskreise vorhanden, so legt einer der Regler die jeweiligen Ausschaltzeitpunkte fest, und die anderen Regler verkürzen für ihre Speicher- und Ausgangskreise die Einschaltintervalle entsprechend den jeweiligen Bedürfnissen mittels eines der jeweiligen Sekundärwicklung nachgeschalteten Schalters.

Fig. 2 zeigt demgegenüber das Verhalten eines Gleichstrom/Gleichstrom-Wandlers nach der Erfindung, beispielsweise bei drei getrennt geregelten Speicher- und Ausgangskreisen. In Zeile 2.1 ist wiederum die Zeitskala t dargestellt mit im Zeitmultiplex periodisch nacheinander auftretenden Zeitschlitzen A, B, C. Diese drei Zeitschlitze A, B und C entsprechen in ihrer Gesamtlänge periodischen Taktintervallen T, die durch den starren Wandlertakt vorgegeben sind. Die Zeitschlitze A, B, C können entweder gleich lang oder wie gezeigt verschieden lang sein. Jedem der Zeitschlitze A, B, C ist einer der Speicher- und Ausgangskreise fest zugeordnet. Analog zum oben Gesagten wird nun innerhalb der Zeitschlitze A, B bzw. C das Ende des jeweiligen Einschaltintervalls geregelt. Dies wird durch Zeile 2.3 für den Zeitschlitz A, durch Zeile 2.4 für den Zeitschlitz B und durch Zeile 2.5 für den Zeitschlitz C dargestellt. Die Einschaltintervalle a, b bzw. c sind wiederum schraffiert gezeichnet und die Doppelpfeile am Ende der Einschaltintervalle zeigen die Art der Regelung. Für den Primärstrom durch die Primärwicklung des Impulstransformators ergibt sich aufgrund der Zeitmultiplexierung die Summenfolge aller einzelnen Ein- und Ausschaltintervalle, was in Zeile 2.2 dargestellt ist (Einschaltintervalle schraffiert).

Es ist offensichtlich, dass auf die beschriebene Weise jede der Ausgangsspannungen unabhängig von den anderen Spannungen einstellbar und regelbar ist. Auch schnelle Regelsprünge eines der Regler beeinflussen die anderen Regler nicht. Damit ergibt sich, dass ein nach dem aufgezeigten Prinzip aufgebauter Gleichstrom/Gleichstrom-Wandler statisch wie dynamisch gleich gute Regeleigenschaften aufweist.

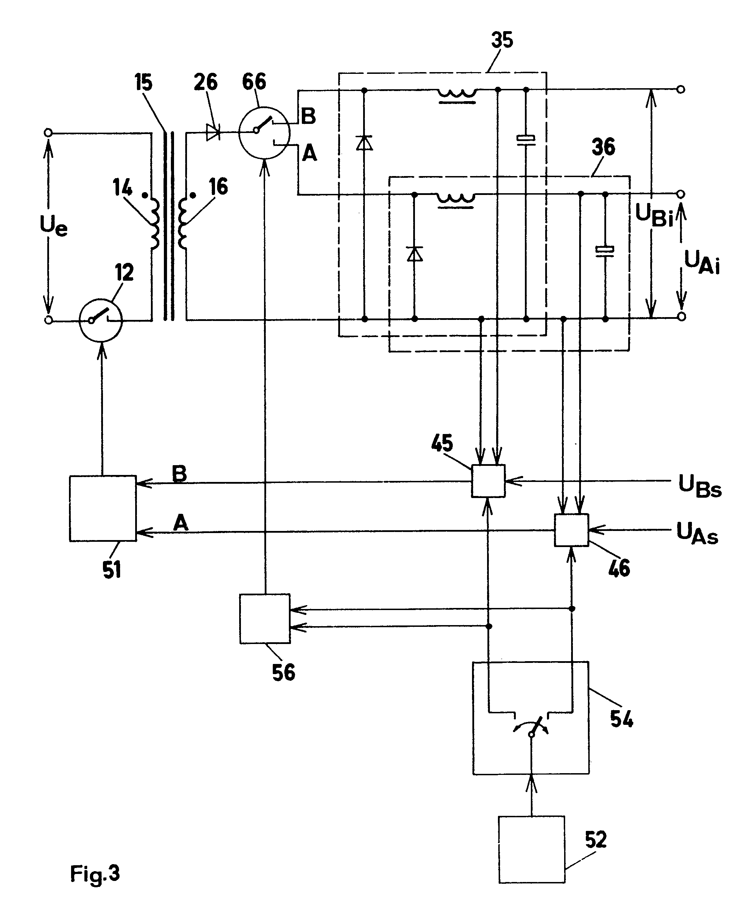

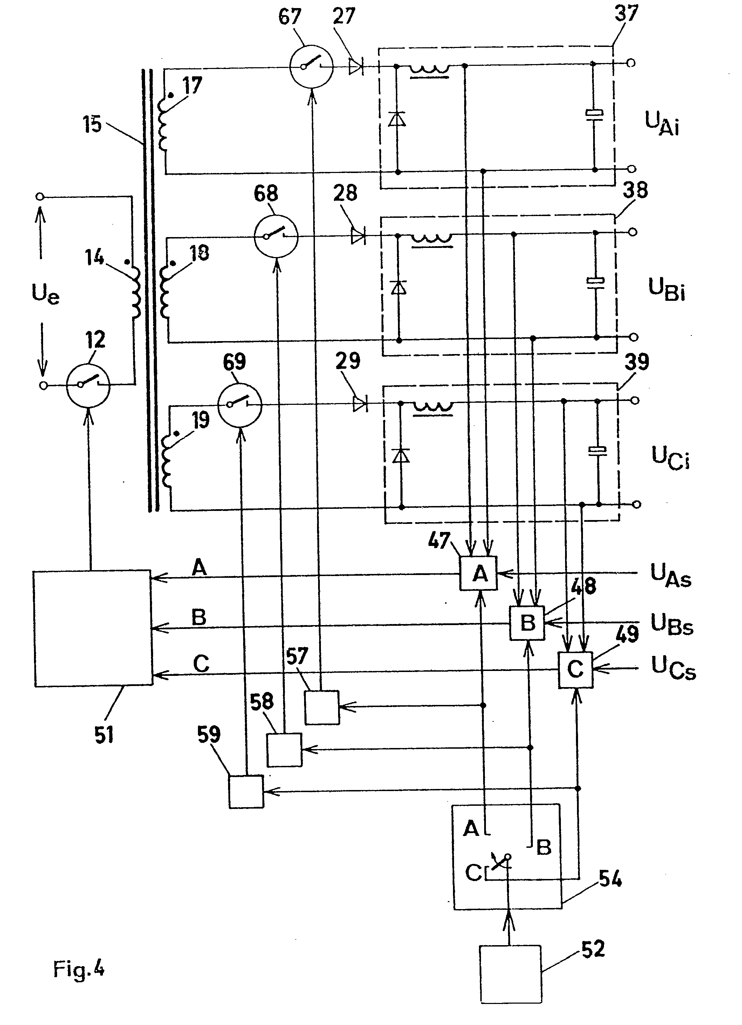

Anhand von Fig. 3 und 4 werden im folgenden zwei Ausführungen für Gleichstrom/Gleichstrom-Wandler der erfindungsgemässen Art beschrieben, wobei gleiche Bauelemente in beiden Figuren mit gleichen Bezugsnummern versehen sind.

Die zu wandelnde Einganssspannung $U_e$ liegt in beiden Figuren über einen steuerbaren Schalter 12, z. B. einen Schalttransistor oder Thyristor, an der Primärwicklung 14 eines Impulstransformators 15 an. Die Sekundärwicklung 16 (Fig. 3) bzw. die Sekundärwicklungen 17, 18, 19 (Fig. 4) sind über Dioden 26, 27, 28 bzw. 29 mit zugeordneten Speicher- und Ausgangskreisen 35, 36 (Fig. 3) bzw. 37, 38, 39 (Fig. 4) verbunden. Jeder dieser Kreise weist in bekannter Weise eine Drossel und einen Kondensator als Speicherelemente und eine Freilaufdiode zur Freigabe des Strompfades in den Auschaltphasen auf. An den Ausgängen der Speicher- und Ausgangskreise 35, 36, 37, 38, 39 werden die gewandelten Spannungen $U_{Ai}$, $U_{Bi}$ und $U_{Ci}$ als Ist-Spannungen bereitgestellt.

Die Ist-Spannungen werden zum Zwecke der Regelung abgegriffen und zugeordneten Reglern 45, 46 (Fig. 3) bzw. 47, 48, 49 (Fig. 4) zugeführt. Diese vergleichen die Ist-Spannungen mit den zugeordneten Soll-Spannungen $U_{As}$, $U_{Bs}$ bzw. $U_{Cs}$ und regeln die Länge der jeweiligen Einschaltintervalle. Hierzu geben sie Steuersignale an eine Schaltersteuerung 51 ab, die als Stellglied für alle Spannungsregelkreise dient. Die Steuersignale bewirken das Ein- und Ausschalten des Schalters 12 und damit den Stromfluss bzw. die Stromunterbrechung in der Primärwicklung 14. Der Schalter 12 dient damit als Pimärstromunterbrecher.

Der Taktgenerator 52 liefert bei starrer Taktfrequenz, z. B. 20 kHz, Taktimpulse an eine Zeitmultiplexier-Einheit 54. Diese symbolisch als Schalter dargestellte Einheit übernimmt die Aufteilung der durch die Taktimpulse vorgegebenen Taktintervalle T in die Zeitschlitze A, B (Fig. 3) bzw. A, B, C (Fig. 4) entsprechend Fig. 2. Jeder Zeitschlitz wird einem der Regler 45, 46 (Fig. 3) bzw. 47, 48, 49 zugeführt. Die Regler legen für die ihnen hierdurch vorgegebenen Zeitabschnitte die jeweiligen Einschaltintervalle a, b, bzw. c fest.

Die Zeitschriften A, B (Fig. 3) bzw. A, B, C (Fig. 4) dienen weiter als Steuersignale für Schaltersteuerungen 56 (Fig. 3) bzw. 57, 58, 59 (Fig. 4). Diese Steuerungen bewirken jeweils während des jeweils zugeordneten Zeitschlitzes A, B, C das Umschalten eines Schalters 66 (Fig. 3) bzw. das Schliessen des zugeordneten Schalters 67, 68, 69 (Fig. 4). Diese Schalter sind beispielsweise Schalttransistoren oder Tyristoren und sind eingefügt zwischen die jeweilige Sekundärwicklung 16, 17, 18 und 19 und die zugeordneten Speicher- und Ausgangskreise 35, 36, 37, 38, 39. Durch das Umschalten des Schalters 66 (Fig. 3) bzw. durch das Schliessen nur jeweils eines der Schalter 67, 68, 69 wird bewirkt, dass die über den Impulstransformator 15 jeweils übertragene Energie nur in denjenigen Speicher- und Ausgangskreis 35, 36, 37, 38, 39 einströmt, der dem jeweiligen Zeitschlitz A, B, C zugeordnet ist.

Die Schaltungen entsprechend den Figuren 3 und 4 stellen Regelkreise dar, die im Zeitmultiplex und damit unabhängig voneinander vor allem den preislich und volumenmässig aufwendigsten Baustein der Schaltungen nämlich den Leistungsimpulstransformator 15, gemeinsam verwenden. Damit ist die Möglichkeit zum Aufbau preisgünstiger Gleichstrom/Gleichstrom-Wandler mit sehr gutem Regelverhalten gegeben.

Die Schaltung nach Fig. 3 verwendet nur eine Sekundärwicklung 16. Die Ausgangsspannungen $U_A$ und $U_B$ sind aus diesem Grund galvanisch nicht unabhängig voneinander. Dieser Nachteil für gewisse Anwendungen wird vermieden, wenn entsprechend Fig. 4 mehrere unabhängige Sekundärwicklungen 17, 18, 19 verwendet werden. Diese Wicklungen können gleiche oder verschiedene Windungszahlen aufweisen.

Es sind zahlreiche Varianten der gezeigten Schaltungen möglich, mittels der den jeweiligen Bedürfnissen optimal angepasste Wandler, beispielsweise als Speiseeinheit eines selbständigen elektronischen Gerätes mit verschiedenen Speisespannungen, aufbaubar ist. Die Varianten können praktisch alle genannten Bauelemente betreffen und liegen im Können des Fachmannes. Folgende Varianten seien speziell erwähnt:

Die Regler 45, 46 (Fig. 3) bzw. 47, 48, 49 (Fig. 4) sind zusammenfassbar zu einem zeitmultiplexiert für alle Regelkreise einsetzbaren Regler. Dieser kann beispielsweise als Prozessor mit Speicher zur Speicherung der jeweils eingestellten Einschaltdauern ausgebildet sein.

Die Taktfrequenz des Taktgenerators 52 kann beliebig gewählt werden. Geringe Schwankungen der Frequenz sind zulässig, sofern sie langsam sind gegenüber der gewählten Frequenz, da es bei der Regelung nur auf das Verhältnis der Einschaltzu den Ausschaltdauern und nicht auf die absoluten Intervallängen ankommt.

Die Einschaltintervalle a, b, c, können innerhab der zugeordneten Zeitschlitze A, B, C, phasemässig beliebig angeordnet sein. Sie müssen nicht zeitgleich mit den Zeitschlitzen beginnen, sondern können beispielsweise zeitgleich mit ihnen enden, was dann Regelung der Einschaltzeitpunkte bedeutet.

**Patentansprüche**

1. Gleichstrom/Gleichstrom-Wandler nach dem Prinzip des Schaltreglers, mit einer Regelschaltung zum pulsbreitemodulierten und zyklischen Schalten der Primärstromunterbrecher in Abhängigkeit von der jeweiligen Ausgangsspannung an einem Speicher- und Ausgangskreis (35 bis 39) und im starren Takt eines Taktgenerators (52), dadurch gekennzeichnet,
– dass ein einziger Impulstransformator (15) vorgesehen ist, dessen Primärwicklung (14) in an sich bekannter Weise mit einem einzigen Primärstromunterbrecher (12) in Reihe geschaltet ist,
– dass eine Mehrzahl von Speicher- und Ausgangskreisen (35 bis 39) vorgesehen ist zur Abga-

be voneinander unabhängiger Ausgangsspannungen ($U_A$, $U_B$, $U_C$),
– dass jedem Speicher- und Ausgangskreis (35 bis 39) ein eigener Regler (45 bis 49) zugeordnet ist, von denen jeder ausgebildet ist zum Schalten des Primärstromunterbrechers (12),
– dass zwischen der oder den Sekundärwicklung(en) (16 bis 19) und den Speicher- und Ausgangskreisen (35 bis 39) Schalter (66 bis 69) vorgesehen sind und,
– dass eine Multiplexier-Einheit (54) vorgesehen ist zum Aufteilen der durch den Takt des Taktgenerators (52) gegebenen Zeitintervalle (T) in Zeitschlitze (A, B, C) und zum zyklischen Einschalten jeweils eines Schalters (66 bis 69) und zum Aktivschalten jeweils eines Reglers (45 bis 49) während jeweils eines zugeordneten Zeitschlitzes (A, B, C).

2. Gleichstrom/Gleichstrom-Wandler nach Anspruch 1, dadurch gekennzeichnet, dass jedem Speicher- und Ausgangskreis (37, 38, 39) eine eigene Sekundärwicklung (17, 18, 19) zugeordnet ist.

3. Gleichstrom/Gleichstrom-Wandler nach Anspruch 1, dadurch gekennzeichnet, dass allen Speicher- und Ausgangskreisen (35, 36) eine gemeinsame Sekundärwicklung (16) zugeordnet ist.

4. Gleichstrom/Gleichstrom-Wandler nach Anspruch 1, dadurch gekennzeichnet, dass die Schalter (66 bis 69) Halbleiterschalter sind.

5. Gleichstrom/Gleichstrom-Wandler nach Anspruch 1, dadurch gekennzeichnet, dass die Zeitmultiplexier-Einheit (54) die Zeitintervalle (T) in ungleich lange Zeitschlitze (A, B, C) unterteilt.

## Claims

1. Direct current to direct current converter according to the principle of the switching regulator, with a regulating circuit for the pulse width-modulated and cyclic switching of the primary circuit breaker as a function of the particular output voltage at a storage and output circuit (35 to 39) and in the fixed clock of a clock generator (52), characterized in that there is a single pulse transformer (15), whose primary winding (14) is connected in serie in per se known manner to a single primary circuit breaker (12), that a plurality of storage and output circuits (35 to 39) is provided for supplying independent output voltages ($U_A$, $U_B$, $U_C$), that with each storage and output circuit (35 to 39) is associated a single regulator (45 to 49), each being constructed for switching the primary circuit breaker (12), that between the secondary winding or windings (16 to 19) and the storage and output circuits (35 to 39) are provided switches (66 to 69) and that a multiplexing unit (54) is provided for subdividing the time periods (T) given by the clock of the clock generator (52) into time slots (A, B, C) and for the cyclic switching on of in each case one switch (66 to 69) and for active switching of in each case one regulator (45 to 49) during in each case one associated time slot (A, B, C).

2. Direct current to direct current converter according to claim 1, characterized in that a single secondary winding (17, 18, 19) is associated with each storage and output circuit (37, 38, 39).

3. Direct current to direct converter according to claim 1, characterized in that a common secondary winding (16) is associated with all storage and output circuits (35, 36).

4. Direct current to direct current converter according to claim 1, characterized in that the switches (66 to 69) are semiconductor switches.

5. Direct current to direct current converter according to claim 1, characterized in that the time multiplexing unit (54) subdivides the timing periods (T) into unequally long time slots (A, B, C).

## Revendications

1. Convertisseur continu-continu selon le principe du régulateur avec un branchement de régulation pour l'enclenchement de l'interrupteur primaire, avec modulation de la largeur d'impulsion et cycliquement, en fonction de chaque tension de sortie, à un circuit d'accumulation et de sortie (35 à 39), et en impulsion fixe d'un générateur d'impulsion (52), caractérisé en ce que:
– un seul transformateur d'impulsion (15) est prévu, dont l'enroulement primaire (14) est branché en série d'une manière connue avec un interrupteur unique de courant primaire (12),
– il est prévu un certain mombre de circuits d'accumulation et de sortie (35 à 39), pour délivrer des tensions de sortie (UA, UB, UC), indépendantes les unes des autres,
– un régulateur particulier (45 à 49) est appliqué à chaque circuit d'accumulation et de sortie (35 à 39), et chaque régulateur est associé à une connexion de l'interrupteur du courant primaire (12),
– des commutateurs (66 à 69) sont prévus entre le ou les enroulement(s) secondaires (16 à 19) et les circuits d'accumulation et de sortie (35 à 39) et
– qu'une unité de multiplexage en temps (54) est prévue pour répartir les intervalles de temps (T) donnés par l'impulsion du générateur d'impulsion (52), en des tranches de temps (A, B, C), et qu'est prévu un commutateur (66 à 69), pour chaque enclenchement cyclique et qu'un régulateur (45 à 49) est prévu pour chaque branchement d'activation pendant une tranche de temps (A, B, C) affectée.

2. Convertisseur continu-continu selon la revendication 1, caractérisé en ce qu'un enroulement secondaire propre (17 à 19) est affecté à chaque circuit d'accumulation et de sortie (37, 38, 39).

3. Convertisseur continu-continu selon la revendication 1, caractérisé en ce qu'un enroulement secondaire commun (16) est affecté à tous les circuits d'accumulation et de sortie (35, 36).

4. Convertisseur continu-continu selon la revendication 1, caractérisé en ce que les commutateurs (66 à 69) sont des régulateurs à semi-conducteurs.

5. Convertisseur continu-continu selon la revendication 1, caractérisé en ce que l'unité de multiplexage en temps (54) subdivise les intervalles de temps (T) en des tranches de temps (A, B, C) inégalement longues.

Fig.1

Fig.2

Fig.3

0 164 144

Fig. 4